# EUROPEAN PATENT APPLICATION

(11) **EP 4 742 346 A1**
(43) Date of publication of application: **13.05.2026**
(21) Application number: 25210555.6
(22) Date of filing: 22.10.2025
(51) Int. Cl.: H01M 10/04, H01M 50/211

(54) **BATTERY CELL STACKING APPARATUS AND METHOD**

(30) Priority: 11.11.2024 KR 20240159698
(71) Applicant: SAMSUNG SDI CO., LTD., Yongin-si, Gyeonggi-do 17084 (KR)
(72) Inventor: BAEK, Jongseo, 17084 Yongin-si (KR)
(74) Representative: Marks & Clerk LLP

(57) **Abstract**

The present disclosure relates to a battery cell stacking apparatus and method. The battery cell stacking apparatus includes an arrangement unit configured to arrange battery cells to be stacked, a transfer unit configured to grip and transfer some of the battery cells arranged by the arrangement unit, a polarity direction change unit configured to change polarity directions of the some of the battery cells transferred from the transfer unit by rotating the some of the battery cells, an rearrangement unit configured to grip and rearrange the some of the battery cells whose polarity directions are changed by the polarity direction change unit at original positions thereof between the arranged battery cells, and a controller configured to control operations of the arrangement unit, the transfer unit, the polarity direction change unit, and the rearrangement unit.

## Description

### FIELD

The present disclosure relates to a battery cell stacking apparatus and method for stacking battery cells by simultaneously changing polarity directions of the battery cells.

### BACKGROUND

Different from primary batteries that are not designed to be recharged, secondary batteries are designed to be discharged and recharged. Low-capacity secondary batteries are used in portable small electronic devices such as smartphones, feature phones, laptop computers, digital cameras, and camcorders, whereas large-capacity secondary batteries are widely used as power sources for driving motors in hybrid vehicles, electric vehicles, and the like as well as for power storage batteries. Such a secondary battery includes an electrode assembly formed of a positive electrode and a negative electrode, a case for accommodating the electrode assembly, and electrode terminals connected to the electrode assembly.

The herein information disclosed in this Background section is for enhancement of understanding of the background of the present disclosure, and therefore, it may contain information that does not constitute a related (or prior) art.

### SUMMARY

The present disclosure is directed to providing a battery cell stacking apparatus and method that can reduce a work time by simultaneously gripping a plurality of battery cells, changing their polarity directions, and stacking the plurality of battery cells.

According to an aspect of the present disclosure, there is provided a battery cell stacking apparatus including an arrangement unit configured to arrange battery cells to be stacked, a transfer unit configured to grip and transfer some of the battery cells arranged by the arrangement unit, a polarity direction change unit configured to change polarity directions of the some of the battery cells transferred from the transfer unit by rotating the some of the battery cells, a rearrangement unit configured to grip and rearrange the some of the battery cells whose polarity directions are changed by the polarity direction change unit at original positions thereof between the arranged battery cells, and a controller configured to control operations of the arrangement unit, the transfer unit, the polarity direction change unit, and the rearrangement unit.

In some embodiments, the arrangement unit adjusts a spacing between the battery cells to be stacked according to a size and/or shape of each respective battery cell of the battery cells to be stacked and comprises a position sensor configured to detect positions of the arranged battery cells.

In some embodiments, each of the transfer unit and the rearrangement unit comprises a plurality of grippers and each of the transfer unit and the rearrangement unit are configured to grip a plurality of battery cells simultaneously and move the plurality of battery cells while maintaining a constant spacing between respective ones of the plurality of battery cells.

In some embodiments, a contact surface of respective ones of the plurality of grippers is made of an elastic material to prevent damage to a surface of a respective battery cell of the plurality of battery cells.

In some embodiments, a width and a height of a gripper of the plurality of grippers are adjustable to grip a respective battery cell of the plurality of battery cells.

In some embodiments, the polarity direction change unit comprises a turntable configured to rotate the some of the battery cells and a spacing adjustment part configured to adjust a spacing when the polarity directions of the some of the battery cells are changed.

In some embodiments, a battery cell of the battery cells is a pouch-type battery cell.

In some embodiments, a battery cell of the battery cells is a prismatic-type battery cell.

According to another embodiment, there is provided a battery cell stacking method comprising: arranging battery cells to be stacked in a line; gripping some of the arranged battery cells and transferring the gripped some of the battery cells to a polarity direction change unit; rotating the transferred some of the battery cells to change polarity directions of the transferred some of the battery cells; and gripping the some of the battery cells whose polarity directions are changed and rearranging the some of the battery cells at original positions thereof between remaining battery cells of the arranged battery cells which are other than the some of the battery cells.

In some embodiments, the transferring of the gripped some of the battery cells and the rearranging of the some of the battery cells comprise automatically adjusting a gripping force of a gripper configured to grip the some of the battery cells according to a weight and/or size of respective battery cells of the some of the battery cells.

In some embodiments, the rotating of the transferred some of the battery cells comprises adjusting a spacing to prevent interference when the transferred some of the battery cells are rotated.

In some embodiments, the rearranging of the some of the battery cells comprises, when the some of the battery cells whose polarity directions are changed are inserted at original positions thereof between the remaining battery cells of the arranged battery cells, adjusting directions of and spacings between the arranged battery cells to complete an arrangement of the battery cells in a line.

According to still another embodiment, there is provided a battery cell stacking apparatus comprising: an arrangement unit configured to arrange a plurality of battery cells in a line to have a same polarity direction; a transfer unit configured to grip the plurality of battery cells arranged by the arrangement unit and move the plurality of battery cells battery cells gripped by the transfer unit to the polarity direction change unit, grip the plurality of battery cells whose polarity directions are changed by the polarity direction change unit, and rearrange the plurality of battery cells gripped by the transfer unit at original positions thereof between arranged battery cells; and the polarity direction change unit, wherein the polarity direction change unit is configured to change polarity directions of the plurality of battery cells moved to the polarity direction unit by the transfer unit by rotating the plurality of battery cells, wherein the transfer unit is coupled to the polarity direction change unit, and a rotation of the plurality of battery cells is implemented through a rotational movement of the transfer unit.

In some embodiments, the transfer unit comprises a plurality of grippers configured to grip the plurality of battery cells simultaneously and move the plurality of battery cells while maintaining a constant spacing between respective ones of the plurality of battery cells.

In some embodiments, a contact surface of a gripper of the plurality of grippers is made of an elastic material to (stably) grip a battery cell of the plurality of battery cells when the plurality of battery cells are rotated by the polarity direction change unit.

In some embodiments, the polarity direction change unit comprises a turntable configured to perform the rotational movement of the transfer unit.

In some embodiments, the polarity direction change unit comprises a spacing adjustment part configured to adjust a spacing between respective ones of the plurality of battery cells to prevent interference when the polarity directions of the plurality of battery cells are changed.

In some embodiments, a battery cell of the plurality of battery cells is a pouch-type battery cell.

In some embodiments, a battery cell of the plurality of battery cells is a prismatic-type battery cell.

In some embodiments, the arrangement unit is a conveyor belt.

According to yet another aspect of the present disclosure, there is provided a battery cell stacking method including arranging a plurality of battery cells in a line to have the same polarity direction, gripping even-numbered battery cells among the arranged battery cells with a gripper and transferring the even-numbered battery cells in a direction perpendicular to a line of the arranged battery cells, simultaneously rotating the transferred even-numbered battery cells to change the polarity directions of the battery cells, and rearranging the battery cells whose polarity directions are changed at original positions thereof between the arranged battery cells to complete an arrangement of the battery cells in a line.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is an example diagram illustrating a secondary battery module in which secondary batteries are disposed according to an embodiment of the present disclosure;
FIG. 2 is an example diagram illustrating a secondary battery pack formed to apply the secondary battery module shown in FIG. 1 to an actual product according to an embodiment of the present disclosure;
FIG. 3 is a diagram for describing a vehicle including the secondary battery pack shown in FIG. 2 according to an embodiment of the present disclosure;
FIG. 4 is a block diagram illustrating a battery cell stacking apparatus according to an embodiment of the present disclosure;
FIGS. 5A to 5D are schematic drawings illustrating a battery cell stacking process according to an embodiment of the present disclosure;
FIG. 6 is a diagram illustrating a battery cell stacking method according to an embodiment of the present disclosure;
FIG. 7 is a schematic diagram illustrating main components of a transfer unit and a rearrangement unit in the battery cell stacking apparatus according to one embodiment of the present disclosure;
FIG. 8 is a schematic diagram illustrating main components of a polarity direction change unit in the battery cell stacking apparatus according to one embodiment of the present disclosure; and
FIG. 9 is a schematic diagram illustrating main components of a transfer unit, a rearrangement unit, and a polarity direction change unit, which are integrated, in a battery cell stacking apparatus according to another embodiment of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. In addition, the same reference numerals may be assigned to the same components in different embodiments.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

Recently, as the demand for large-capacity energy storage devices such as an energy storage system (ESS) increases, the interest in the enlargement and multi-stacking of lithium ion battery (LIB) cells is increasing.

In the existing LIB cell stacking process, a method of stacking one battery cell and changing its polarity direction at a time has been mainly used. When a single battery module is typically formed of 12 to 16 battery cells, this process can maintain a sufficient stacking speed and work efficiency.

However, in ESS modules constituting a large-scale platform, the number of battery cells included in one module has increased significantly, and more than 60 battery cells have been stacked.

In the conventional method, a process of gripping a single battery cell with a gripper, changing a polarity direction of the battery cell, and then moving the battery cell to a stacking position is repeated. Thus, a stacking speed relatively slows down in inverse proportion to the number of battery cells, and particularly, in a large platform requiring a large number of battery cells, the overall work time significantly is increased. In addition, efficiency of the work process is low because each battery cell is gripped and stacked.

In addition, in this method, since a spacing between battery cells should be manually adjusted or a position of a gripper should be individually adjusted whenever an individual battery cell is stacked, there is a high probability of work deviation, and the position and arrangement of the battery cell are unstable until the stacking is completed.

Thus, the existing method is insufficient to meet the production needs of large platforms such as the ESS.

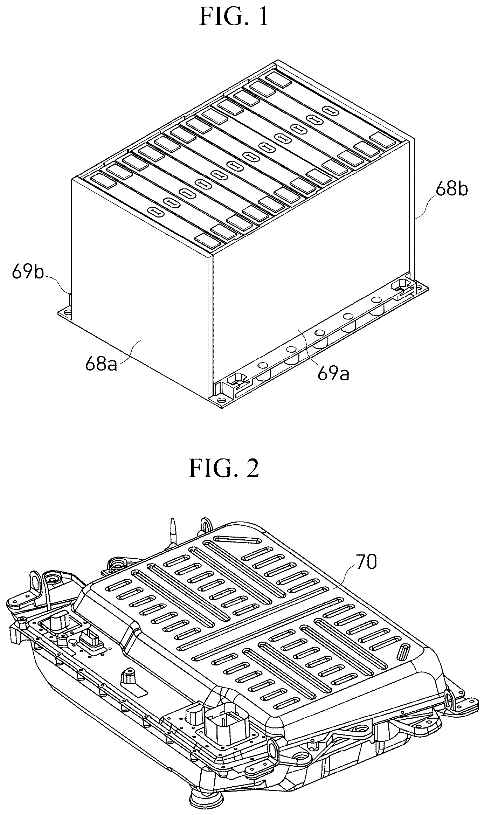

FIG. 1 is an example diagram illustrating a secondary battery module in which secondary batteries are disposed. With the increase in secondary battery capacity for driving electric vehicles or the like, a secondary battery module may be manufactured by arranging a plurality of secondary battery cells transversely and/or longitudinally and connecting them together. The plurality of secondary batteries may be arranged in a space defined by a pair of end plates 68a and 68b facing each other and a pair of side plates 69a and 69b facing each other. The secondary batteries may be arranged in an arrangement (direction) and number to obtain desired voltage and current specifications.

FIG. 2 is a perspective view of a battery pack 70 according to embodiments of the present disclosure. Referring to FIG. 2, the battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, for example, an electric vehicle, a hybrid vehicle, or a plug-in hybrid vehicle. The vehicle may be a four-wheeled vehicle or a two-wheeled vehicle, but is not limited thereto.

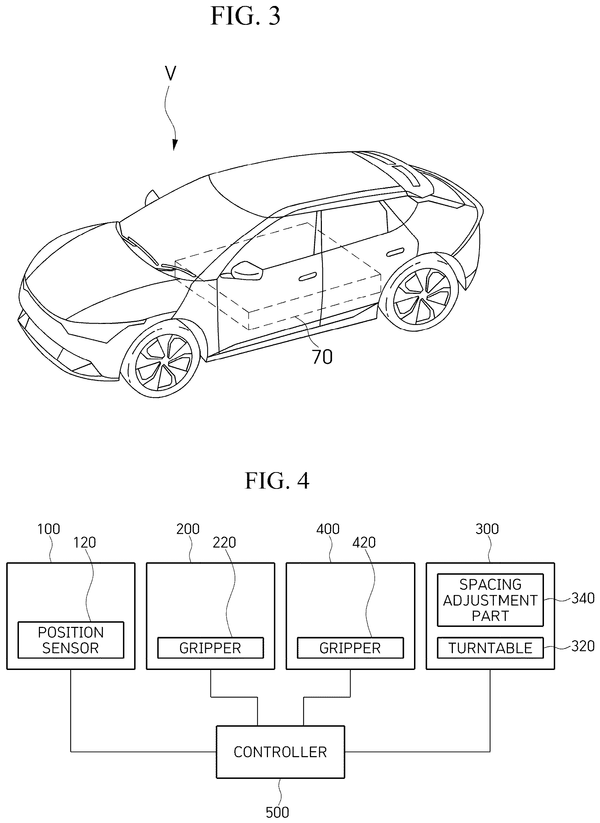

FIG. 3 is a diagram for describing a vehicle including the secondary battery pack shown in FIG. 2. FIG. 3 shows a vehicle(V) that includes the battery pack 70 shown in FIG. 2 on the lower body thereof. The vehicle(V) may operate by (e.g., may be powered by) receiving power from the battery pack 70.

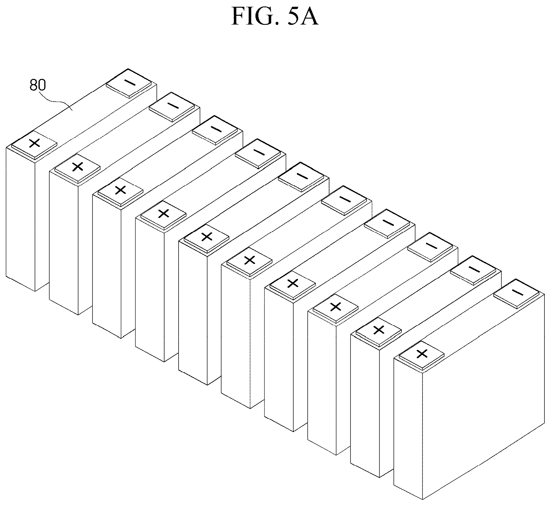

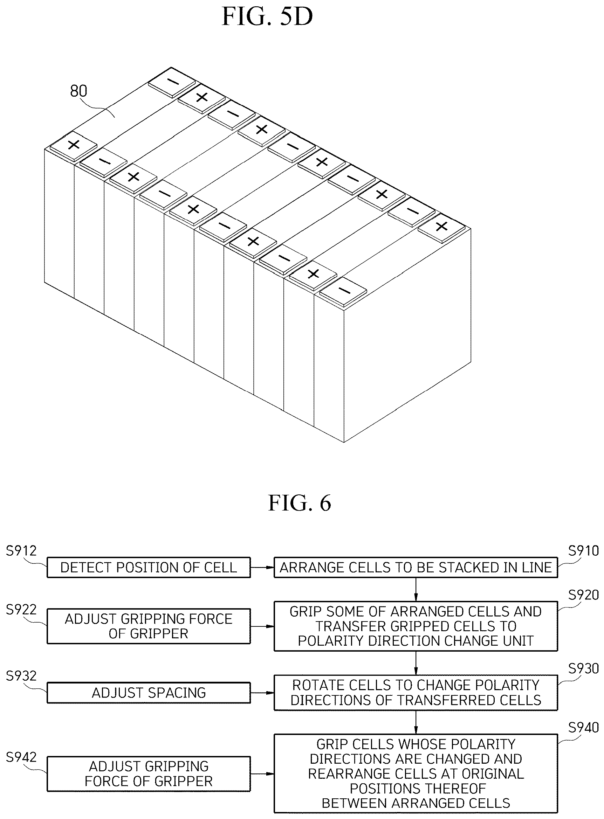

FIG. 4 is a block diagram illustrating a battery cell stacking apparatus according to an embodiment of the present disclosure, FIGS. 5A to 5D are schematic drawings illustrating a battery cell stacking process according to an embodiment of the present disclosure, and FIG. 6 is a diagram illustrating a battery cell stacking method according to an embodiment of the present disclosure.

As shown in the drawings, the battery cell stacking apparatus according to the embodiment of the present disclosure includes an arrangement unit 100 configured to arrange battery cells to be stacked, a transfer unit 200 configured to grip and transfer some of the arranged battery cells, a polarity direction change unit 300 configured to change polarity directions of the battery cells transferred from the transfer unit 200 by rotating the battery cells, a rearrangement unit 400 configured to grip and rearrange the battery cells whose polarity directions are changed at original positions thereof between the arranged battery cells, and a controller 500 configured to control operations of the arrangement unit 100, the transfer unit 200, the polarity direction change unit 300, and the rearrangement unit 400.

The battery cell in the present disclosure may be a secondary battery of any of various structures and shapes, such as a pouch type or a prismatic type, and in the embodiment of the present disclosure, a stacking method and apparatus will be described based on a prismatic type secondary battery.

The prismatic secondary battery in one embodiment of the present disclosure is formed such that a first terminal and a second terminal electrically connected to a negative electrode tab and a positive electrode tab, respectively, are exposed to the outside.

FIGS. 5A to 5D are schematic drawings illustrating the prismatic secondary battery and showing a positive electrode portion (first terminal) and a negative electrode portion (second terminal) as + and -, respectively, on an outer side of a case.

A secondary battery module as shown in FIG. 1 is formed such that the secondary battery is formed by arranging and stacking a plurality of battery cells. In this case, each battery cell should be connected according to a correct polarity.

Conventionally, since the process of gripping a single battery cell with a gripper, changing a polarity direction of the battery cell, and then transferring the battery cell to a stacking position is repeated, work process efficiency is very low. Further, a process time is increased significantly due to manually adjusting a spacing between the battery cells and individually adjusting a position of the gripper.

The battery cell stacking apparatus according to the embodiment of the present disclosure drastically reduces a work process time by simultaneously changing polarity directions and performing simultaneous arrangement and includes the arrangement unit 100, the transfer unit 200, the polarity direction change unit 300, the rearrangement unit 400, and the controller 500. In the embodiment of the present disclosure, a single secondary battery constituting a battery module or a battery pack is referred to as a battery cell, and for convenience, in some cases, the battery cell is described interchangeably with a secondary battery.

The battery cell stacking apparatus according to the embodiment of the present disclosure changes a polarity direction of a specific battery cell and re-arranges the battery cell at an appropriate position, thereby enabling efficient overall assembly of a battery module or pack.

In the battery cell stacking apparatus according to the embodiment of the present disclosure, the arrangement unit 100 arranges battery cells in a line and adjusts a spacing to prepare for stacking (see FIG. 5A). The arrangement unit 100 may be a movable structure or mechanical device capable of arranging the battery cells, adjusting a spacing between the battery cells, and supporting the battery cells. For example, the arrangement unit 100 may be a conveyor belt or a battery cell arrangement tray capable of adjusting the spacing between the battery cells using a driving force of a motor.

The arrangement unit 100 may automatically adjust the spacing according to a size and a shape of the battery cell, detect a position of the arranged battery cell through a position sensor 120, and maintain the arrangement state.

The arrangement unit 100 adjusts a pitch between the battery cells according to the specifications of the battery cell, thereby preventing the battery cells from being in close contact or interfering with each other.

The position sensor 120 detects position information on the arranged battery cells in real time and checks an arrangement state of the battery cells. The controller 500 may perform the spacing adjustment and arrangement task accurately on the basis of the position information. The position sensor 120 may be an optical sensor, a laser sensor, or a camera-based sensor.

Specifically, since pouch-type or prismatic-type battery cells are arranged in a line with opposite polarity directions on a conveyor belt or a battery cell arrangement tray, the arrangement unit 100 should change polarity directions of some battery cells to match a polarity connection direction.

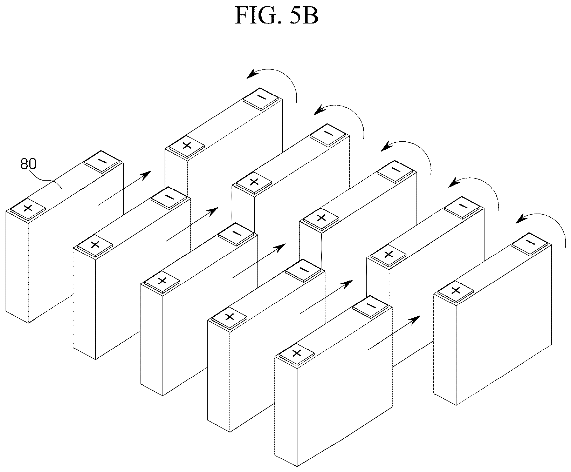

In addition, the transfer unit 200 according to the embodiment of the present disclosure is to grip some of the arranged battery cells and transfer the gripped battery cells to the polarity direction change unit 300 for changing polarity directions (e.g., see FIG. 5B).

The transfer unit 200 according to the embodiment of the present disclosure includes a plurality of grippers 220 to grip the battery cells, thereby simultaneously gripping and transferring the plurality of battery cells at a same time. The transfer unit 200 transfers the plurality of battery cells at a same time to increase stacking efficiency and maintains the spacing and position between battery cells during the transferring.

The transfer unit 200 includes the gripper 220, and the gripper 220 may be coupled to a frame that is movable in a specific direction to transfer the battery cell gripped by the gripper 220 to a specific position. Alternatively, the gripper 220 is formed on a robot arm so that the robot arm itself may perform an operation of moving the battery cell to the polarity direction change unit 300.

In addition, according to the embodiment of the present disclosure, a contact surface of the gripper 220 may be formed of an elastic material, such as silicone or rubber, to prevent damage to a surface of the battery cell when gripping the battery cell. In particular, since a lithium-ion battery cell is sensitive to an external impact or damage, the contact surface of the gripper 220 may be formed of a soft and flexible elastic material.

In addition, the gripper 220 may be formed to be adjustable in width and height to grip the battery cell. That is, the width and height of the gripper 220 may be adjusted according to the type or shape of the battery cell, enabling the gripper 220 to grip battery cells of various sizes and shapes while stably gripping the battery cells. In addition, the shape of the gripper 220 may be formed to correspond to the shape of the battery cell. That is, the gripper 220 may be formed to correspond to the shape of each battery cell so as to stably grip a pouch-type or prismatic-type battery cell.

In addition, a gripping force of the gripper 220 for gripping the battery cell may be automatically adjusted according to a weight or size of the battery cell.

In this way, the transfer unit 200 may improve a work speed by gripping and moving the plurality of battery cells at a time and maintain the arrangement state accurately by maintaining a constant spacing. In addition, the width and height of the gripper 220 may be adjusted to grip and move the battery cells of various sizes and shapes, which can be useful for stacking various types of battery modules.

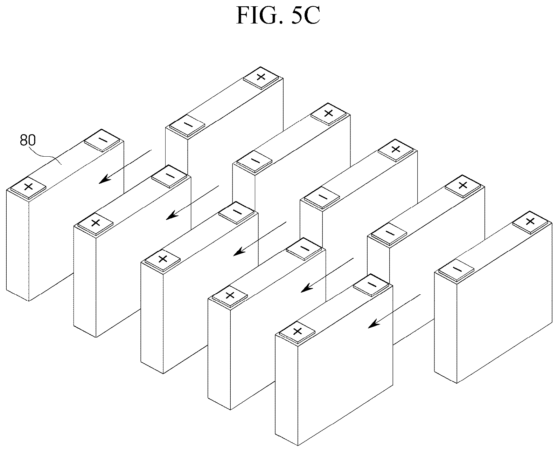

In addition, the polarity direction change unit 300 according to the embodiment of the present disclosure rotates the battery cell to change the polarity direction of the battery cell moved by the transfer unit 200 (see FIGS. 5B and 5C).

According to the embodiment of the present disclosure, the polarity direction change unit 300 may include a turntable 320 to rotate the transferred battery cell and change the polarity direction by rotating the transferred battery cell by ±180 degrees. In this way, the polarity directions of some of the arranged battery cells may be reversed in desired directions, thereby achieving polarity arrangement for electrical connections of the battery cells.

The turntable 320 performs a polarity direction change of the battery cell by rotating the battery cell at a predetermined angle while fixing the battery cell, and the rotation operation may rotate a single battery cell or a plurality of battery cells simultaneously. In addition, a fixing clamp 360 for fixing a position of the battery cell transferred from the transfer unit 200 may be formed on the turntable 320.

In addition, a spacing adjustment part 340 adjusts a spacing between the battery cells or between the arrangement unit 100 and the transfer unit 200 to prevent interference between a battery cells rotating with other battery cells or with the arrangement unit 100 and the transfer unit 200 when the polarity direction is changed. That is, as the battery cells are prevented from colliding with each other or from being in close proximity so as to be at risk of colliding with each other during the rotation operation, the polarity direction change operation may proceed smoothly. In addition, after the polarity direction is changed, the position of the battery cell is rearranged to maintain arrangement.

When a large-capacity battery pack or module is manufactured, the polarity direction change unit 300 according to the embodiment of the present disclosure performs a polarity direction change operation quickly and accurately by simultaneously changing the polarity directions of the plurality of battery cells to opposite directions, thereby enabling series or parallel connections.

In addition, the rearrangement unit 400 according to the embodiment of the present disclosure is to re-grip the battery cells whose polarity directions are changed in the polarity direction change unit 300 and accurately insert the re-gripped battery cells at original positions thereof between the arranged battery cells to enable stacking (see FIGS. 5C and 5D).

The rearrangement unit 400 is used to move the battery cells with the changed polarity directions to appropriate positions by precisely adjusting the height, spacing, and position of the battery cells to accurately rearrange the battery cells at original positions thereof between the arranged battery cells without interference with other battery cells. In this way, the arrangement in a line is completed.

For example, when 10 battery cells are arranged in a line, and after polarity directions of even-numbered battery cells are changed among the 10 battery cells, the rearrangement unit 400 precisely inserts the even-numbered battery cells with the changed polarity directions at original positions thereof between odd-numbered battery cells that are arranged to complete stacking.

Meanwhile, the transfer unit 200 and the rearrangement unit 400 may be used without any change. That is, after the battery cells are transferred to the polarity direction change unit 300 by the transfer unit 200 and the polarity direction change is completed, the transfer unit 200 may rearrange the battery cells with the changed polarity directions at original positions thereof between the arranged battery cells. This may be implemented as a separate unit or as the same unit according to a process environment, an equipment situation, and/or a type of battery cell.

In addition, the transfer unit and the rearrangement unit, which are implemented as the same unit, may be coupled to the polarity direction change unit 300 according to process equipment, and thus the rotation of the battery cell may be implemented through a rotational movement of the transfer unit 200.

That is, the polarity direction change unit 300, to which the transfer unit and the rearrangement unit are coupled, moves to move the battery cells, and then the transfer unit and the rearrangement unit coupled to the turntable 320 are rotated to change the polarity directions of the battery cells as the battery cells are rotated. Thereafter, when the polarity direction change unit 300 moves to its original position, the battery cells are rearranged to original positions thereof by the transfer unit and the rearrangement unit.

The controller 500 according to the embodiment of the present disclosure comprehensively controls and monitors the operations of the arrangement unit 100, the transfer unit 200, the polarity direction change unit 300, and the rearrangement unit 400.

The controller 500 comprehensively manages the entire system and controls the operation of each unit to be performed in sequence. The spacing of the battery cells in the arrangement operation performed by the arrangement unit 100, the gripping and rotation states of the battery cells in the transfer and rotation operations performed by the transfer unit 200 and the polarity direction change unit 300, and the stacking positions of the battery cells in the rearrangement operation performed by the rearrangement unit 400 are monitored to allow the automated process to be performed accurately.

For example, the controller 500 monitors the operation of each unit in real time through a programmable logic controller (PLC), performs operations according to the sequence, and ensures that operations such as adjusting the spacing between the battery cells, adjusting the gripping force, and changing the polarity directions are performed smoothly.

FIGS, 5A to 5D are schematic drawings illustrating a battery cell stacking process according to the embodiment of the present disclosure.

FIG. 5A shows a state in which the battery cells to be stacked are arranged in a line by the arrangement unit 100, all the battery cells are arranged in a line with each of their polarities (+, -) in the same direction, and the battery cells are arranged with regular spacings.

FIG. 5B shows that battery cells (even-numbered battery cells) whose polarity directions are to be changed are selected among the arranged battery cells and moved to the polarity direction change unit 300 through the transfer unit 200. The moved battery cells are transferred to the polarity direction change unit 300 and prepared for rotation, and a rotation arrow in the drawing shows a process of changing the polarity direction by rotating the battery cells at ±180 degrees.

FIG. 5C shows a state in which the battery cells which are transferred to the polarity direction change unit 300 are rotated and of which the polarity directions are changed are gripped by the rearrangement unit 400 and moved and rearranged at original positions thereof between the arranged battery cells. After the even-numbered battery cells are rotated to change the polarity directions, the even-numbered battery cells are then rearranged between the odd-numbered battery cells while the polarity directions are changed. In this case, the spacing and direction are precisely adjusted to complete the stacked structure.

FIG. 5D shows a state in which the battery cells whose polarity directions are changed by the rearrangement unit 400 are rearranged at original positions thereof between the arranged battery cells to complete an arrangement in a line, all the battery cells are stacked in an alternating polarity direction and inserted into a case to finally complete a battery module.

FIG. 6 is a diagram illustrating a battery cell stacking method according to an embodiment of the present disclosure.

The battery cell stacking method according to the embodiment of the present disclosure is a method of stacking battery cells, which includes arranging a plurality of battery cells to have the same polarity direction (S910), gripping some of the arranged battery cells and transferring the gripped battery cells to the polarity direction change unit 300 (S920), rotating the transferred battery cells to change polarity directions of the transferred battery cells (S930), and gripping and rearranging the battery cells whose polarity directions are changed at original positions between the arranged battery cells (S940).

In the arranging of the plurality of battery cells to have the same polarity direction (S910) according to the embodiment of the present disclosure, the battery cells to be stacked are arranged in a line and polarity directions of all the battery cells in the same direction. This facilitates the polarity direction change operation and provides a structure that allows only the polarity directions of even-numbered battery cells to be changed in a subsequent operation.

In addition, the arrangement unit 100 may automatically adjust a spacing according to a size and a shape of the battery cell, detect a position of the arranged battery cell through the position sensor 120 (S912), and maintain the arrangement state. As shown in the FIG. 5A, the arrangement unit 100 automatically aligns the plurality of battery cells in the same direction and adjusts the spacing therebetween.

In the gripping of some of the arranged battery cells and transferring the gripped battery cells to the polarity direction change unit 300 (S920), even-numbered battery cells are gripped among the battery cells arranged in a line and moved to the polarity direction change unit 300 for changing a polarity direction. Rather than adjusting all the battery cells one by one, the polarity change operation is performed efficiently by selecting battery cells whose polarity directions are to be changed and transferring the selected battery cells simultaneously. Here, the transfer unit 200 uses the grippers 220 to grip the even-numbered battery cells and moves the even-numbered battery cells to polarity direction change unit 300. This corresponds to the operation shown in FIG. 5B.

Here, an operation of automatically adjusting a gripping force of the gripper 220 for gripping the battery cell according to a weight and/or size of the battery cell (S922) may be included. This is for the gripper 220 to stably grip and move battery cells of various sizes by recognizing the weight and size of the battery cell and appropriately adjusting the gripping force during the transfer operation.

In the rotating of the battery cell to change the polarity direction of the transferred battery cell (S930) according to the embodiment of the present disclosure, the battery cell transferred to the polarity direction change unit 300 is rotated at ±180 degrees to change the polarity direction. In this way, an electrical connection structure of the battery pack is optimized by changing positions of a positive electrode (+) and a negative electrode (-) of the battery cell.

A fixing clamp 360 may be formed on the turntable 320 of the polarity direction change unit 300, and the battery cell is fixed at the fixing clamp 360 and rotated. In this case, in order to prevent interference, a spacing adjustment part 340 adjusts the spacing between the battery cells or a spacing with respect to the transfer unit 200 or the arrangement unit 100.

Here, an operation of adjusting the spacing to prevent interference during the rotation of the battery cell (S932) may be included. This is to prevent interference with other battery cells or other units when rotating to change the polarity direction of the battery cell. By appropriately adjusting the spacing during the rotation, the battery cells are prevented from colliding or interfering with each other, allowing the rotation operation to proceed smoothly and preventing damage to the battery cells.

In the gripping and rearranging of the battery cells whose polarity directions are changed at original positions thereof between the arranged battery cells (S940) according to the embodiment of the present disclosure, the battery cells rotated and with the changed polarity directions are gripped again by a gripper 420 and inserted and rearranged between the odd-numbered battery cells according to the original arrangement.

This completes a structure in which the polarity arrangement of all the battery cells is alternated by rearranging the battery cells with the changed polarity directions at appropriate positions, thereby completing the electrical connection of the stacked module. This corresponds to the final arrangement state according to the operations shown in FIG. 5C and 5D.

In addition, the operation of automatically adjusting a gripping force of the gripper 420 for gripping the battery cell according to a weight and/or size of the battery cell (S942) may be included.

Here, when the battery cells whose polarity directions are to be changed are inserted at original positions thereof between the arranged battery cells, an operation of adjusting the directions of and spacings between the battery cells to complete an arrangement of the battery cells in a line is performed. This means that, when the battery cells whose polarity directions are changed are rearranged, the spacing and direction between the originally arranged battery cells are adjusted and inserted in correct positions, thereby precisely matching the polarity arrangement of the battery cells and ultimately completing a stable stacked structure.

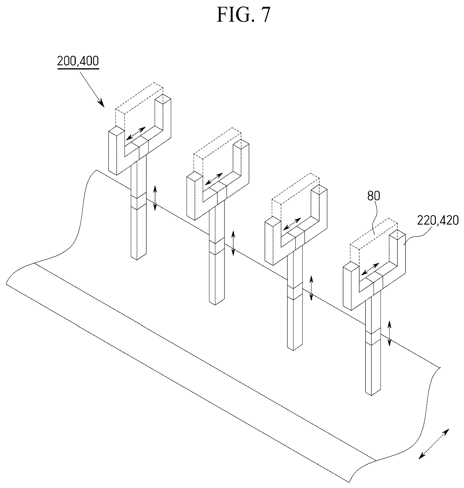

FIG. 7 is a schematic diagram illustrating main components of the transfer unit 200 and the rearrangement unit 400 in the battery cell stacking apparatus according to one embodiment of the present disclosure, and the battery cell is gripped by the gripper 220 or the gripper 420.

The gripper 220 or the gripper 420 is used to grip the battery cell and move the battery cell stably during the transfer and rearrangement operations and enables movement and arrangement of the battery cell by moving the battery cell upward and downward. Arrows in the drawing denote that the gripper 220 or the gripper 420 may be adjusted in height and width, the transfer unit 200 and rearrangement unit 400 may move leftward, rightward, forward, and rearward, and in the drawing, the horizontal movement direction of the transfer unit 200 and the rearrangement unit 400 are indicated. Through this movement, the battery cell is moved to a desired position and, after the polarity direction is changed, re-inserted in a correct position.

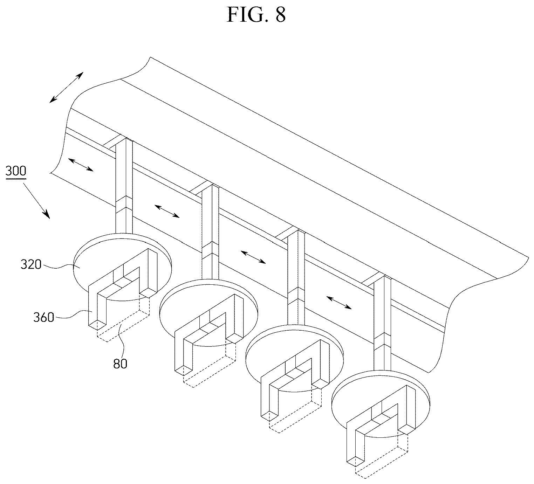

FIG. 8 is a schematic diagram illustrating main components of the polarity direction change unit 300 in the battery cell stacking apparatus according to one embodiment of the present disclosure. The polarity direction change unit 300 is configured to fix the battery cell transferred from the transfer unit 200 of FIG. 7 and rotate the battery cell to change the polarity direction of the battery cell to be stacked and may include the turntable 320 and the fixing clamp 360.

The fixing clamp 360 grips both sides of the battery cell to prevent the battery cell from slipping or shaking during the rotation. In FIG. 8, a structural body located below the turntable 320 corresponds to the fixing clamp 360.

As shown in FIG. 8, the turntable 320 is formed to be movable forward, rearward, leftward, and rightward to allow adjustment of the spacing between the battery cells and a spacing from other units, thereby minimizing interference when the battery cells are rotated.

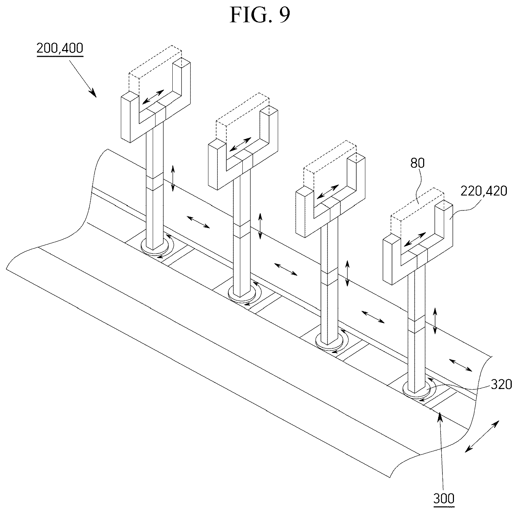

FIG. 9 is a schematic diagram illustrating main components of a transfer unit 200, a rearrangement unit 400, and a polarity direction change unit 300, which are integrated, in the battery cell stacking apparatus according to another embodiment of the present disclosure.

As shown in FIG. 9, another embodiment of the present disclosure provides a battery cell stacking apparatus in which the transfer unit 200 and the rearrangement unit 400 are formed as an integrated unit, and the polarity direction change unit 300 is coupled to the transfer unit 200 and the rearrangement unit 400, such that rotation of the battery cells for polarity change can be implemented through the rotational motions of the transfer unit 200 and the rearrangement unit 400.

That is, the rotation operation of the polarity direction change unit 300 is performed while the transfer unit 200 grips the battery cell. After polarity direction change, the battery cells are rearranged between the originally arranged battery cells by the rearrangement unit 400, which is integrated with the transfer unit 200. This enables the transfer, polarity direction change, and rearrangement of the battery cells to be performed without a separate gripping or moving operation thereby simplifying the device and reducing a working time.

According to embodiments of the present disclosure, since the polarity directions of the battery cells whose polarity directions are to be changed are changed simultaneously, efficiency of the process can be improved, and the processes of the battery cell arrangement, the polarity direction change, and the rearrangement are automated so that the position and spacing of the battery cells can be accurately maintained, and stacking with consistent quality can be completed.

According to embodiments of the present disclosure, there is an effect in that a time required for a process of stacking battery cells can be shortened and production efficiency can be improved, and thus large-scale battery modules for electric vehicles and energy storage systems can be manufactured.

Effects of the present disclosure are not limited to those described herein, and other effects not specifically mentioned herein will be clearly understood by those skilled in the art from the description of the present disclosure herein.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

## Claims

1. A battery cell stacking apparatus comprising:
an arrangement unit configured to arrange battery cells to be stacked;
a transfer unit configured to grip and transfer some of the battery cells arranged by the arrangement unit;
a polarity direction change unit configured to change polarity directions of the some of the battery cells transferred from the transfer unit by rotating the some of the battery cells;
a rearrangement unit configured to grip and rearrange the some of the battery cells whose polarity directions are changed by the polarity direction change unit at original positions thereof between the arranged battery cells; and
a controller configured to control operations of the arrangement unit, the transfer unit, the polarity direction change unit, and the rearrangement unit.

2. The battery cell stacking apparatus as claimed in claim 1, wherein the arrangement unit adjusts a spacing between the battery cells to be stacked according to a size and/or shape of each respective battery cell of the battery cells to be stacked and comprises a position sensor configured to detect positions of the arranged battery cells.

3. The battery cell stacking apparatus as claimed in claim 1 or 2, wherein each of the transfer unit and the rearrangement unit comprises a plurality of grippers and each of the transfer unit and the rearrangement unit are configured to grip a plurality of battery cells simultaneously and move the plurality of battery cells while maintaining a constant spacing between respective ones of the plurality of battery cells.

4. The battery cell stacking apparatus as claimed in claim 3, wherein a contact surface of respective ones of the plurality of grippers is made of an elastic material to prevent damage to a surface of a respective battery cell of the plurality of battery cells.

5. The battery cell stacking apparatus as claimed in claim 3 or 4, wherein a width and a height of a gripper of the plurality of grippers are adjustable to grip a respective battery cell of the plurality of battery cells.

6. The battery cell stacking apparatus as claimed in any preceding claim, wherein the polarity direction change unit comprises a turntable configured to rotate the some of the battery cells and a spacing adjustment part configured to adjust a spacing when the polarity directions of the some of the battery cells are changed.

7. The battery cell stacking apparatus as claimed in any preceding claim, wherein a battery cell of the battery cells is a pouch-type battery cell.

8. The battery cell stacking apparatus as claimed in any one of claims 1 to 6, wherein a battery cell of the battery cells is a prismatic-type battery cell.

9. A battery cell stacking method comprising:
arranging battery cells to be stacked in a line;
gripping some of the arranged battery cells and transferring the gripped some of the battery cells to a polarity direction change unit;
rotating the transferred some of the battery cells to change polarity directions of the transferred some of the battery cells; and
gripping the some of the battery cells whose polarity directions are changed and rearranging the some of the battery cells at original positions thereof between remaining battery cells of the arranged battery cells which are other than the some of the battery cells.

10. The battery cell stacking method as claimed in claim 9, wherein the transferring of the gripped some of the battery cells and the rearranging of the some of the battery cells comprise automatically adjusting a gripping force of a gripper configured to grip the some of the battery cells according to a weight and/or size of respective battery cells of the some of the battery cells.

11. The battery cell stacking method as claimed in claim 9 or 10, wherein the rotating of the transferred some of the battery cells comprises adjusting a spacing to prevent interference when the transferred some of the battery cells are rotated.

12. The battery cell stacking method as claimed in claim 9, 10 or 11, wherein the rearranging of the some of the battery cells comprises, when the some of the battery cells whose polarity directions are changed are inserted at original positions thereof between the remaining battery cells of the arranged battery cells, adjusting directions of and spacings between the arranged battery cells to complete an arrangement of the battery cells in a line.

13. A battery cell stacking apparatus comprising:
an arrangement unit configured to arrange a plurality of battery cells in a line to have a same polarity direction;
a transfer unit configured to grip the plurality of battery cells arranged by the arrangement unit and move the plurality of battery cells battery cells gripped by the transfer unit to a polarity direction change unit, grip the plurality of battery cells whose polarity directions are changed by the polarity direction change unit, and rearrange the plurality of battery cells gripped by the transfer unit at original positions thereof between arranged battery cells; and
the polarity direction change unit, wherein the polarity direction change unit is configured to change polarity directions of the plurality of battery cells moved to the polarity direction change unit by the transfer unit by rotating the plurality of battery cells,
wherein the transfer unit is coupled to the polarity direction change unit, and a rotation of the plurality of battery cells is implemented through a rotational movement of the transfer unit.

14. The battery cell stacking apparatus as claimed in claim 13, wherein the transfer unit comprises a plurality of grippers configured to grip the plurality of battery cells simultaneously and move the plurality of battery cells while maintaining a constant spacing between respective ones of the plurality of battery cells.

15. The battery cell stacking apparatus as claimed in claim 14, wherein a contact surface of a gripper of the plurality of grippers is made of an elastic material to stably grip a battery cell of the plurality of battery cells when the plurality of battery cells are rotated by the polarity direction change unit.
